# EUROPEAN PATENT SPECIFICATION

(11) **EP 1 590 526 B1**
(45) Date of publication and mention of the grant of the patent: **14.11.2007**
(21) Application number: 04701449.3
(22) Date of filing: 12.01.2004
(51) Int. Cl.: D21D 5/16, B01D 33/23

(54) **FILTER SECTOR FOR USE IN ROTARY DISC FILTERS FOR SEPARATING PULP SUSPENSIONS**
FILTERSEKTOR FÜR DREHSCHEIBENFILTER ZUR ABTRENNUNG VON ZELLSTOFFSUSPENSIONEN
SEGMENT DE FILTRE UTILISABLE DANS DES FILTRES A DISQUES ROTATIFS POUR SEPARER DES SUSPENSIONS PULPAIRES

(30) Priority: 23.01.2003 SE 0300169
(43) Date of publication of application: 02.11.2005
(73) Proprietor: GL&V Management Hungary Kft, Hermina ut 17 1146 Budapest (HU)
(72) Inventor: HÄGG, Conny, S-141 42 Huddinge (SE)
(74) Representative: Strandin, Heléne
(86) International application number: PCT/SE2004/000014
(87) International publication number: WO 2004/065687

(56) References cited:
- US-A- 5 227 065
- US-A- 5 792 352
- US-A- 6 113 783

## Description

The present invention relates to a filter sector for use in rotary disc filters for separating suspensions, such as pulp suspensions. The filter sector comprises a first filtration wall of a substantially rigid net, and a second filtration wall of a substantially rigid net opposite the first filtration wall, a filtrate chamber being formed between the first and second filtration walls for receiving filtrate that has flowed through the first and second filtration walls. The filtrations walls are profiled to increase the filtration capacity of the filter sector. Filter sectors of this kind are assembled to form circular filter discs for rotary disc filters.

In a known filter sector of this kind, according to Swedish patent application 9901154-6, the filtration walls of net are corrugated to form a plurality of ridges and valleys. As a result, the known filter sector has a greater filtration capacity than that of a traditional filter sector having planar walls of filter cloth.

The object of the present invention is to provide a new filter sector that also has a greater filtration capacity than that of a traditional filter sector.

This object is obtained by the filter sector described initially characterised in that each filtration wall is profiled to form a multiplicity of cavities and humps, and that each cavity and hump, respectively, includes a multiplicity of meshes of the net. As a result, the effective filtration area of the filter sector is increased as compared with a filter sector of the same size with planar walls of net, whereby the filtration capacity of the filter sector of the invention is improved.

The cavities and humps, respectively, are oriented in rows with the rows of cavities alternating with the rows of humps.

Advantageously, weaving forms the cavities and humps of the net, i.e. a special weaving technique is employed while weaving the net, which makes the new filter sector inexpensive to manufacture. Alternatively, pressing may form the cavities and humps of the net.

Each cavity and hump, respectively, may be defined by four straight sides, wherein each straight side of a cavity is common to one of the four straight sides of an adjacent hump.

The first and second walls of the net take the shape of a bag.

In another embodiment of the invention, the filter sector comprises first and second support walls made of a planar metal net that is coarser than the net of the filtration walls, wherein the first and second support walls support the first and second filtration walls, respectively. The support walls may be joined to each other at the radial sides of the filter sector, whereby the filtration walls and support walls form a bag-shaped filter unit.

The present invention is described in more detail in the following with reference to the accompanying drawings, in which.
Figure 1 is a front view of an embodiment of the filter sector according to the present invention,
Figure 2 is an enlarged detail of the filtration net wall of the filter sector shown in Figure 1, illustrating the woven pattern of the net,
Figure 3 schematically illustrates humps and cavities formed in the filtration net wall,
Figure 4 is a sectional view of the filter sector of Figure 1,
Figure 5 is a filter unit forming part of the embodiment shown in Figure 4, and
Figure 6 is a sector frame forming part of the embodiment shown in Figure 4.

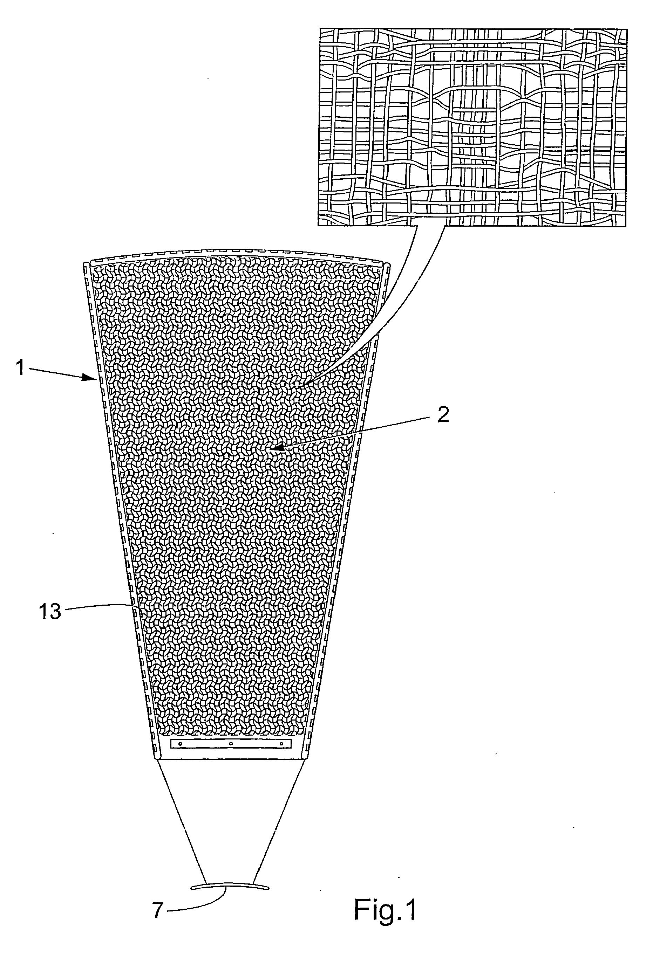

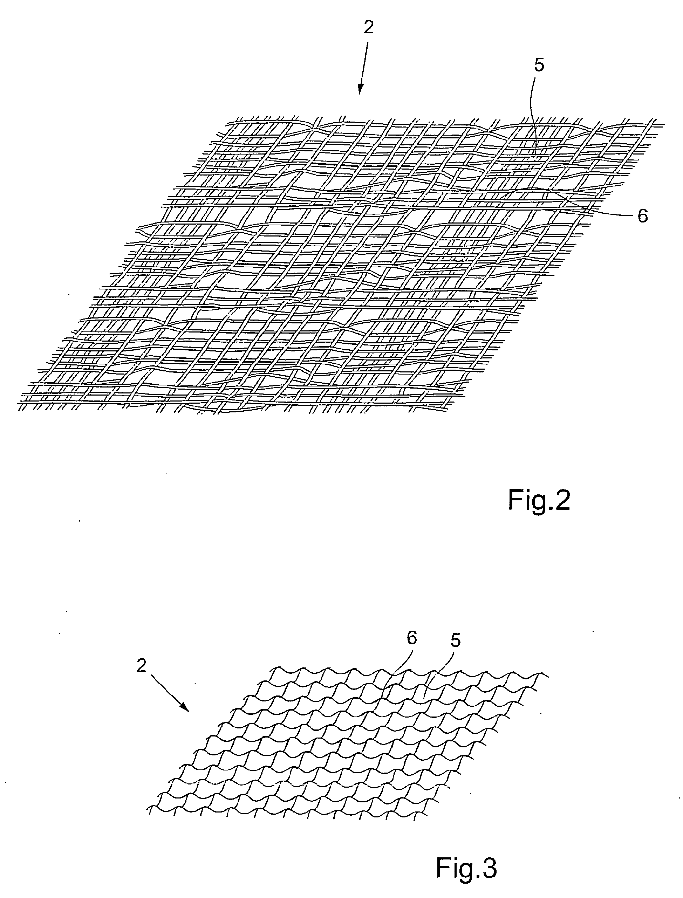

Figure 1 shows a filter sector 1 according to an embodiment of the present invention comprising two opposite filtration walls 2 and 3 of a substantially rigid metal net defining a filtrate chamber 4 for receiving filtrate that has flowed through the filtration walls 2,3. Each filtration net wall 2 and 3, respectively, is woven in accordance with a special pattern that forms a multiplicity of four-sided cavities 5 and humps 6, each of which includes a multiplicity of meshes of the net. Figure 2 illustrates the individual threads in this pattern and figure 3 schematically illustrates the resulted cavities 5 and humps 6 of the net walls 2,3.

A filtrate outlet 7 for filtrate that has flowed through the filtration walls 2,3 to the filtrate chamber 4 is provided at the radial inner end of the filter sector 1. A plurality of such filter sectors 1 are intended to be assembled to form a circular filter disc that is used in a rotary disc filter for separating suspensions, such as fibre pulp suspensions.

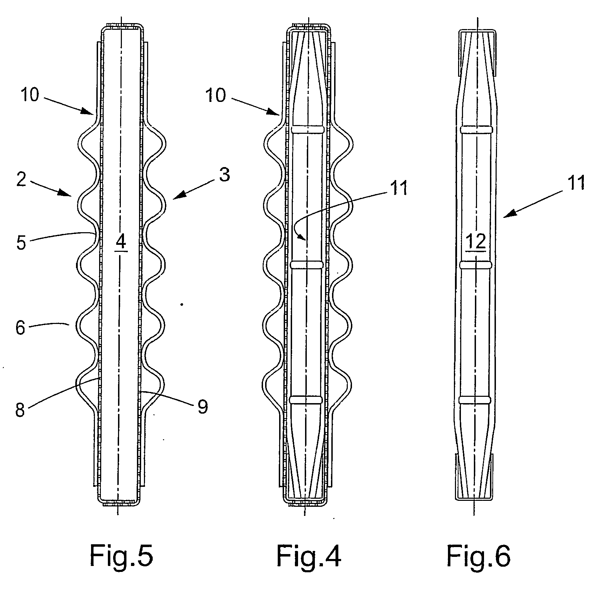

With reference to Figures 4-6, the filtration walls 2 and 3 are joined to two stiff support walls 8 and 9, respectively, made of a planar metal net that is coarser than the net of the filtration walls 2,3. The support walls 8,9 are joined to each other at the radial sides of the filter sector 1, whereby the filtration walls 2,3 and support walls 8,9 form a bag-shaped filter unit 10. The bag-shaped filter unit 10 fits on a sector-shaped rigid grid frame 11 that forms a central filtrate channel 12. The assemblage of the bag-shaped unit 10 and the grid frame 11 (illustrated in Figure 4) is releasably secured to a frame 13 of the filter sector 1.

In case the specific use of the filter sector 1 permits a design of the filtration walls 2, 3 in which the metal net can be made stiff enough, the support walls 8,9 of coarser net may be omitted. In such a case the filtration walls 2,3 may be joined to each other to form a bag-shaped unit.

In operation, several filter sectors 1 are joined to one another to form a filter disc, which is rotated partially immersed in a pool of a suspension to be separated. A pressure difference is created across the filtration walls 2,3 while they are immersed in the suspension during the rotation of the disc, so that a filtrate of the suspension is pressed through the filtration walls 2,3 into the filtrate chamber 4, while coarse particles, such as fibres, of the suspension deposit on the external sides of the filtration walls 2,3. The filtrate flows further through the support walls 8,9 of coarser metal net into the filtrate channel 12. In the filtrate channel 12 the filtrate changes flow direction from a substantially axial direction to a substantially radially inward direction towards the filtrate outlet 7. The separated coarse particles are normally removed from the filtration walls 2,3, as they are above the pool of suspension, by the action of liquid jets sprayed onto the filtration walls 2,3.

## Claims

1. A filter sector (1) for use in rotary disc filters for separating suspensions, the filter sector comprising a first filtration wall (2) of a rigid net, and a second filtration wall (3) of a rigid net opposite the first filtration wall, a filtrate chamber (4) being formed between the first and second filtration walls for receiving filtrate that has flowed through the first and second filtration walls, wherein the filtrations walls are profiled to increase the filtration capacity of the filter sector, **characterised in that** each filtration wall (2, 3) is profiled to form a multiplicity of cavities (5) and humps (6), the cavities (5) and humps (6), respectively, are oriented in rows with the rows of cavities alternating with the rows of humps, and that each cavity and hump, respectively, includes a multiplicity of meshes of the net, wherein the first and second filtration walls (2, 3) of the net take the shape of a bag.

2. A filter sector according to claim 1 , wherein the filtration walls (2, 3) with cavities (5) and humps (6) are being weaved.

3. A filter sector according to claim 1 or 2, wherein the filtration walls (2, 3) with cavities (5) and humps (6) are being pressed.

4. A filter sector according to any one of claims 1 - 3, wherein each cavity (5) and hump (6), respectively, is defined by four straight sides.

5. A filter sector according to claim 4, wherein each straight side of a cavity (5) is common to one of the four straight sides of an adjacent hump (6).

6. A filter sector according to any one of claims 1-5, further comprising first and second support walls (8,9) made of a planar metal net that is coarser than the net of the filtration walls (2,3), wherein the first and second support walls support the first and second filtration walls, respectively.

7. A filter sector according to claim 6, wherein the support walls (8,9) are joined to each other at the radial sides of the filter sector, whereby the filtration walls (2,3) and support walls (8,9) form a bag-shaped filter unit (10).

8. A filter sector according to any one of claims 1-7, wherein the net of the filtration walls (2, 3) comprises a metal net.

## Patentansprüche

1. Filtersektor (1) zur Verwendung in Drehscheibenfiltern zum Abscheiden von Suspensionen, wobei der Filtersektor eine erste Filtrationswand (2) aus einem starren Netz und eine der ersten Filtrationswand gegenüberliegende zweite Filtrationswand (3) aus einem starren Netz aufweist, wobei zwischen der ersten und der zweiten Filtrationswand eine Filtratkammer (4) zur Aufnahme von Filtrat ausgebildet ist, das durch die ersten und zweiten Filterwände geströmt ist, und wobei die Filterwände profiliert sind, um die Filterkapazität des Filtersektors zu erhöhen,
**dadurch gekennzeichnet, dass** jede Filtrationswand (2,3) derart profiliert ist, dass sie mehrere Vertiefungen (5) und Vorsprünge (6) bildet, wobei die Vertiefungen (5) bzw. Vorsprünge (6) in Reihen angeordnet sind und die Reihen von Vertiefungen mit den Reihen von Vorsprüngen alternieren, und dass jede Vertiefung bzw. jeder Vorsprung mehrere Maschen des Netzes aufweist, wobei die ersten und zweiten Filterwände (2,3) des Netzes die Form eines Beutels haben.

2. Filtersektor nach Anspruch 1, bei dem die mit den Vertiefungen (5) und Vorsprüngen (6) versehenen Filterwände (2,3) gewoben sind.

3. Filtersektor nach Anspruch 1 oder 2, bei dem die mit den Vertiefungen (5) und Vorsprüngen (6) versehenen Filterwände (2,3) gepresst sind.

4. Filtersektor nach einem der Ansprüche 1 - 3, bei dem jede Vertiefung (5) bzw. jeder Vorsprung (6) durch vier geradlinige Seiten definiert ist.

5. Filtersektor nach Anspruch 4, bei dem jede geradlinige Seite einer Vertiefung (5) mit einer der vier geradlinigen Seiten eines benachbarten Vorsprungs (6) identisch ist.

6. Filtersektor nach einem der Ansprüche 1 - 5, ferner mit ersten und zweiten Tragwänden (8,9) aus einem flachen Metallnetz, das gröber ist als das Netz der Filterwände (2,3), wobei die ersten und zweiten Tragwände die ersten bzw. zweiten Filterwände halten.

7. Filtersektor nach Anspruch 6, bei dem die Tragwände (8,9) an den Radialseiten des Filtersektors miteinander verbunden sind, wodurch die Filterwände (2,3) und die Tragwände (8,9) eine beutelförmige Filtereinheit bilden.

8. Filtersektor nach einem der Ansprüche 1 - 7, bei dem das Netz der Filterwände (2,3) ein Metallnetz aufweist.

## Revendications

1. Secteur de filtre (1) destiné à être utilisé dans les filtres à disque rotatif destinés à séparer des suspensions, le secteur de filtre comprenant une première paroi (2) de filtration à réseau rigide, et une seconde paroi (3) de filtration à réseau rigide opposée à la première paroi de filtration, une chambre (4) de filtrat étant formée entre les première et seconde parois de filtration afin qu'elle reçoive le filtrat qui s'est écoulé à travers les première et seconde parois de filtration, tel que les parois de filtration sont profilées afin que la capacité de filtration du secteur de filtre soit accrue, **caractérisé en ce que** chaque paroi (2, 3) de filtration est profilée afin qu'elle forme de multiples cavités (5) et saillies (6), les cavités (5) et les saillies (6) respectivement étant orientées en lignes, les lignes de cavités alternant avec les lignes de saillies, et **en ce que** chaque cavité et chaque saillie respectivement comporte de multiples mailles du réseau, les première et seconde parois (2, 3) de filtration du réseau ayant la forme d'un sac.

2. Secteur de filtre selon la revendication 1, dans lequel les parois (2, 3) de filtration ayant les cavités (5) et les saillies (6) sont tissées.

3. Secteur de filtre selon la revendication 1 ou 2, dans lequel les parois (2, 3) de filtration ayant les cavités (5) et les saillies (6) ont été pressées.

4. Secteur de filtre selon l'une quelconque des revendications 1 à 3, dans lequel chaque cavité (5) et chaque saillie (6) respectivement est délimitée par quatre côtés rectilignes.

5. Secteur de filtre selon la revendication 4, dans lequel chaque côté rectiligne d'une cavité (5) est commun à l'un des quatre côtés rectilignes d'une saillie adjacente (6) .

6. Secteur de filtre selon l'une quelconque des revendications 1 à 5, comprenant en outre des première et seconde parois (8, 9) de support formées d'un réseau métallique plan qui est plus grossier que le réseau des parois (2, 3) de filtration, et dans lequel les première et seconde parois de support supportent les première et seconde parois de filtration respectivement.

7. Secteur de filtre selon la revendication 6, dans lequel les parois (8, 9) de support sont raccordées mutuellement aux côtés radiaux du secteur de filtre, de sorte que les parois (2, 3) de filtration et les parois (8, 9) de support forment une unité de filtre (10) en forme de sac.

8. Secteur de filtre selon l'une quelconque des revendications 1 à 7, dans lequel le réseau des parois (2, 3) et filtration est un réseau métallique.
